# EUROPÄISCHE PATENTANMELDUNG

(11) **EP 3 040 456 A1**
(43) Veröffentlichungstag der Anmeldung: **06.07.2016**
(21) Anmeldenummer: 14841145.7
(22) Anmeldetag: 15.08.2014
(51) Int. Cl.: D01H 7/26

(54) **LAGERANORDNUNG UND SPULMASCHINE DAMIT**

(30) Priorität: 30.08.2013 CN 201310389468
(71) Anmelder: Schaeffler Technologies AG & Co. KG, 91074 Herzogenaurach (DE)
(72) Erfinder: CHENG, Kai, Shanghai 201804 (CN); ZHANG, Junjun, Shanghai 201804 (CN); CHEN, Xinping, Shanghai 201804 (CN)
(86) Internationale Anmeldenummer: PCT/CN2014/084525
(87) Internationale Veröffentlichungsnummer: WO 2015/027832

(57) **Zusammenfassung**

Die Erfindung betrifft eine Lagergruppe und eine die Lagergruppe aufweisende Vorspinnmaschine, die Lagergruppe umfassend (100) ein erstes Lager (10), ein zweites Lager (20) sowie einen Lagersitz (40), wobei der Lagersitz (40) einen ersten Installationsraum (41) und einen zweiten Installationsraum (42) aufweist, welche das erste Lager (10) und das zweite Lager (20) aufnehmen, wobei das erste Lager (10) im ersten Installationsraum (41) montiert ist und gleichzeitig mit dem Lagersitz (40) eine Einheit bildet, wobei zwischen dem zweiten Lager (20) und dem ersten Lager (10) eine Hülse (30) angeordnet ist und wobei die Hülse (30) zu dem ersten Lager (10) und dem zweiten Lager (20) koaxial angeordnet ist. Die Lager, die Hülse und der Lagersitz sind miteinander verbunden und können als Einheit an einem externen Bauteil montiert werden, wodurch der Schwierigkeitsgrad der Montage und der Zeitaufwand für Montage und Einstellung verringert werden.

## Beschreibung

### Technisches Gebiet der Erfindung

Die vorliegende Erfindung ist auf dem Gebiet der Textilmaschinen angesiedelt und betrifft insbesondere eine Lagergruppe an einer Vorspinnmaschine.

### Allgemeiner Stand der Technik

Eine Vorspinnmaschine ist eine Textilmaschine, die aus einem Faserband ein Vorgarn herstellt. Eine Vorspinnmaschine wird in die Hauptbestandteile für die Zufuhr, das Strecken, das Zwirnen und das Aufwickeln unterteilt. Das Faserband wird aus einem Faserzylinder hinter der Maschine entnommen, über Führungsrollen weitertransportiert und einer Streckvorrichtung zugeführt. Nach dem Strecken wird das aus dem vorderen Walzenspalt ausgegebene Faserband wegen seiner zu geringen Stärke durch einen rotierenden Flyer mit einer geeigneten Drehung beaufschlagt und das Vorgarn gebildet und zuletzt das Vorgarn spiralförmig auf die Oberfläche der Garnspule gewickelt, um die Anforderungen an die Bearbeitung mit der nachfolgenden Feinspinnmaschine zu erfüllen. Um eine fortgesetzte Rotation des Flyers mit hoher Geschwindigkeit zu realisieren, müssen an der Rotationsachse des Flyers Lager montiert sein.

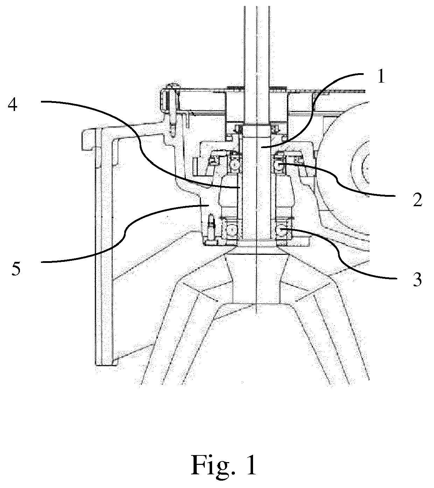

Wie in Figur 1 der anliegenden Zeichnungen gezeigt, sind beim Stand der Technik auf der Rotationsachse 1 eines Flyers ein oberes Lager 2, ein unteres Lager 3 und eine Hülse 4 montiert. Während der Rotation des Flyers nehmen die Lager in der Hauptsache die axiale Last und außerdem eine bestimmte radiale Last auf. Nach umfassenden Erwägungen von Stabilitäts- und Kostenfaktoren werden für das obere Lager 2 und das untere Lager 3 im Allgemeinen Standard-Rillenkugellager gewählt. Im konkreten Montageprozess werden das untere Lager 3, die Hülse 4 und das obere Lager 2 der Reihe nach auf der Rotationsachse 1 montiert und zuletzt wird an der Außenseite des unteren Lagers 3, der Hülse 4 und des oberen Lagers 2 ein metallisches Gehäuse montiert, welches eine Schutzfunktion übernimmt. Da die Montage der Rillenkugellager kompliziert ist und wegen der problematischen Ausrichtung der beiden Rillenkugellager zueinander, geht für Montage und Einstellung viel Zeit verloren.

### Aufgabe der Erfindung

Es ist daher Aufgabe der vorliegenden Erfindung, eine neuartige Lagergruppe bereitzustellen, mit welcher die oben stehenden Nachteile des Standes der Technik beseitigt werden.

### Beschreibung der Erfindung

Zur Lösung der oben stehenden Aufgabe verwendet die vorliegende Erfindung eine Lagergruppe, welche ein erstes Lager, ein zweites Lager sowie einen Lagersitz umfasst, wobei der Lagersitz einen ersten Installationsraum und einen zweiten Installationsraum aufweist, um das erste Lager und das zweite Lager aufzunehmen. Dabei ist das erste Lager im ersten Installationsraum montiert und bildet gleichzeitig mit dem Lagersitz eine Einheit, während zwischen dem zweiten Lager und dem ersten Lager eine Hülse angeordnet ist und die Hülse zum ersten Lager und zum zweiten Lager koaxial angeordnet ist.

Im Vergleich zum Stand der Technik hat die vorliegende Erfindung die Vorzüge, dass das Lager, die Hülse und der Lagersitz miteinander verbunden sind und als Einheit an einem externen Bauteil montiert werden können und so den Schwierigkeitsgrad der Montage sowie den Zeitaufwand für Montage und Einstellung verringern.

Eine weitere von der vorliegenden Erfindung zu lösende Aufgabe ist die Bereitstellung einer Vorspinnmaschine mit einfach zu montierenden Lagern.

Um die oben stehende Aufgabe zu lösen, verwendet die vorliegende Erfindung eine Vorspinnmaschine, welche einen Flyer umfasst, der eine Rotationsachse aufweist, an der eine Lagergruppe montiert ist, die ein erstes Lager, ein zweites Lager und einen Lagersitz umfasst, wobei der Lagersitz einen ersten Installationsraum und einen zweiten Installationsraum aufweist, um das erste Lager und das zweite Lager aufzunehmen. Dabei ist das erste Lager im ersten Installationsraum montiert und bildet gleichzeitig mit dem Lagersitz eine Einheit, während zwischen dem zweiten Lager und dem ersten Lager eine Hülse angeordnet ist und die Hülse zu dem ersten Lager und dem zweiten Lager koaxial angeordnet ist.

Im Vergleich zum Stand der Technik hat die vorliegende Erfindung die Vorzüge, dass das Lager, die Hülse und der Lagersitz miteinander verbunden sind und als Einheit an der Rotationsachse eines Flyers montiert werden können und so den Schwierigkeitsgrad der Montage und den Zeitaufwand für Montage und Einstellung verringern.

### Kurze Beschreibung der Zeichnungen

Eine bevorzugte Ausführungsform des erfindungsgemäß ausgebildeten Lagergruppe wird nachfolgend unter Bezugnahme auf die beigefügten Zeichnungen näher erläutert. Dabei zeigen:
- Figur 1: den Montageaufbau eines Lagers in einer Vorspinnmaschine des Stands der Technik;
- Figur 2: eine Schnittansicht einer Lagergruppe zu einer Ausführungsform der vorliegenden Erfindung.

### Ausführliche Beschreibung der Zeichnungen

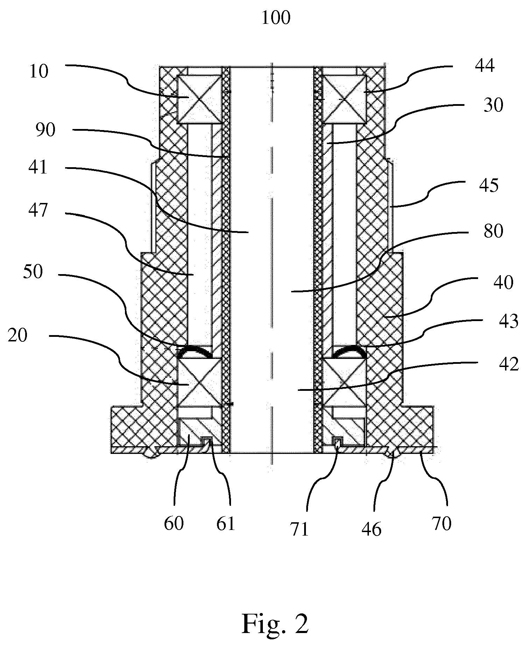

Die Lagergruppe der vorliegenden Erfindung wird verwendet für den Bereich der Textilmaschinen und insbesondere am Flyer einer Vorspinnmaschine. Um die Montage der Lager auf der Rotationsachse eines Flyers zu vereinfachen, stellt die vorliegende Erfindung gemäß Figur 2 eine Lagergruppe 100 bereit, die ein erstes Lager 10, ein zweites Lager 20, eine Hülse 30 sowie einen Lagersitz 40 umfasst. Um Kosten zu sparen und einen zuverlässigen Betrieb zu gewährleisten, können für das erste Lager und das zweite Lager vorzugsweise Rillenkugellager verwendet werden.

Das erste Lager 10 und das zweite Lager 20 sind koaxial angeordnet und außerdem durch einen bestimmten Abstand voneinander getrennt, wobei in der vorliegenden Ausführungsform zwei Rillenkugellager mit den gleichen Spezifikationen verwendet werden. Natürlich können in anderen Ausführungsformen auch zwei Rillenkugellager mit unterschiedlichen Spezifikationen verwendet werden. Die Hülse 30 ist zwischen dem ersten Lager 10 und dem zweiten Lager 20 angeordnet und gleichzeitig zu dem ersten Lager 10 und dem zweiten Lager 20 koaxial angeordnet. Konkret sind die beiden Enden der Hülse 30 jeweils am Innenring des ersten Lagers 10 (nicht abgebildet) und am Innenring des zweiten Lagers 20 (nicht abgebildet) abgestützt, so dass die Hülse 30 das erste Lager 10 und das zweite Lager 20 voneinander trennen und verhindern kann, dass sich das Lager 10 und das Lager 20 während des Rotationsprozesses in axialer Richtung bewegen.

Der Lagersitz 40 ist als Hohlzylinder ausgeführt und umfasst einen Installationsraum zur Montage des ersten Lagers 10 und des zweiten Lagers 20, wobei der Installationsraum konkret einen ersten Installationsraum 41 zur Montage des ersten Lagers 10 und einen zweiten Installationsraum 42 zur Montage des zweiten Lagers 20 umfasst. Der erste Installationsraum 41 und der zweite Installationsraum 42 sind miteinander verbunden und gleichzeitig sind die Abmessungen des zweiten Installationsraums 42 in radialer Richtung größer als die Abmessungen des ersten Installationsraums 41 in radialer Richtung, wodurch an der Verbindungsstelle des ersten Installationsraums 41 und des zweiten Installationsraums 42 eine Stufenfläche 43 gebildet wird. Weiterhin weist der Lagersitz 40, um das erste Lager 10 richtig zu positionieren, eine mit dem ersten Installationsraum 41 verbundene und in radialer Richtung erstreckte Nut 44 auf und der Außenring des ersten Lagers 10 (nicht abgebildet) ist in der Nut 44 montiert. Außerdem weist der Lagersitz 40 an der Außenseite ein Gewinde 45 auf, das zur Verbindung mit einem externen Bauteil verwendet wird.

Um die Rotationsgenauigkeit und Lebensdauer des Lagers 20 zu erhöhen, ist im zweiten Installationsraum 42 eine Feder 50 angeordnet, um für das zweite Lager 20 eine Vorspannfunktion auszuüben. Vorzugsweise wird eine Wellenfeder verwendet. Die eine Seite der Feder 50 ist an der Stufenfläche 43 abgestützt und die andere Seite ist am Außenring des zweiten Lagers 20 (nicht abgebildet) abgestützt. Um ein Auslaufen des Schmieröls aus dem Lager zu verhindern, ist am zweiten Lager 20 an der der Feder gegenüberliegenden Seite ein Dichtungsring 60 angeordnet, wobei der Dichtungsring 60 im zweiten Installationsraum 42 montiert ist und der Dichtungsring 60 an der Außenseite außerdem eine Dichtungsstruktur 70 aufweist, mit der der Dichtungseffekt weiter verstärkt werden kann. Konkret weist die näher zum zweiten Lager 20 liegende Endfläche des Lagersitzes 40 mehrere nach außen hervorstehende Nasen 46 auf und die Dichtungsstruktur 70 weist mehrere mit den Nasen 46 korrespondierende kleine Löcher (nicht abgebildet) auf, um die Dichtungsstruktur 70 an dieser Endfläche des Lagersitzes 40 montieren zu können. Außerdem ist an der äußeren Endfläche des Dichtungsrings 60 eine Ringnut 61 ausgespart und die Dichtungsstruktur 70 weist einen mit der Ringnut 61 korrespondierenden geknickten Teil 71 auf.

Der Montageablauf der Lagergruppe 100 der vorliegenden Erfindung ist wie folgt: Zuerst wird das erste Lager 10 in ein Kunststoff-Formwerkzeug gegeben und am ersten Lager 10 außen durch Einspritzen der Lagersitz 40 geformt, d.h. das erste Lager 10 und der Lagersitz 40 bilden eine Einheit. Anschließend wird der Lagersitz 40 mit dem daran befestigten ersten Lager 10 aus dem Kunststoff-Formwerkzeug entnommen und mit dem weiteren Montageprozess begonnen. Konkret wird die Hülse 30 in den Installationsraum des Lagersitzes 40 gesetzt, so dass ein Ende der Hülse 30 am Innenring des ersten Lagers 10 abgestützt ist. Anschließend wird die Feder 50 in den Installationsraum hineingedrückt, bis die Feder 50 auf die Stufenfläche 43 drückt. Anschließend wird das zweite Lager 20 im Installationsraum montiert, so dass das andere Ende der Hülse 30 am Innenring des zweiten Lagers 20 abgestützt ist. Anschließend werden der Dichtungsring 60 und die Dichtungsstruktur 70 montiert, was aber, da ihre Montageweise in der Branche hinreichend bekannt ist, hier nicht näher erläutert wird. Der hohle Teil des ersten Lagers 10, des zweiten Lagers 20 und der Hülse 30 bildet in der Lagergruppe 100 das Innenloch 80 und zuletzt wird im Innenloch ein ringförmiger Einsatz 90 montiert, um die spätere Montage der Lagergruppe an der Rotationsachse (nicht abgebildet) des Flyers der Spinnmaschine zu erleichtern.

Zwischen dem Lagersitz 40 und der Hülse 30 wird eine Aufnahmehöhlung 47 gebildet, wobei im Spritzgussprozess am Lagersitz 40 eine mit der Aufnahmehöhlung 47 verbundene Ölbefüllungsbohrung (nicht abgebildet) angebracht werden kann und wobei durch die Ölbefüllungsbohrung Schmiermittel in die Aufnahmehöhlung 47 eingeführt werden kann, um das erste und das zweite Lager zu schmieren. Falls das erste und das zweite Lager mit einer Selbstschmierungsfunktion versehen sind, muss natürlich kein Schmiermittel in die Aufnahmehöhlung 47 gefüllt werden.

Die Lagergruppe der vorliegenden Erfindung kann als Einheit auf der Rotationsachse eines Flyers montiert werden und es ist nicht notwendig, das erste Lager 10, die Hülse 30 und das zweite Lager 20 separat auf der Rotationsachse zu montieren, was den Schwierigkeitsgrad der Montage senkt und Zeit für die Montage und Einstellung einspart. Außerdem hat der Lagersitz 40 eine relativ geringe Masse und kann so das Gewicht der gesamten Lagergruppe verringern und die Montage vereinfachen.

Obwohl zu der vorliegenden Erfindung nur einige modellhafte Ausführungsformen beschrieben wurden, dienen diese Beschreibungen lediglich der Veranschaulichung und stellen keine Begrenzung dar. Innerhalb des in den Patentansprüchen aufgezeichneten Bereichs ist unter der Voraussetzung, dass Geist und Umfang der vorliegenden Erfindung nicht verlassen werden, jede Art von Veränderung möglich.

### Bezugszahlenliste

- 1: Rotationsachse
- 2: oberes Lager
- 3: unteres Lager
- 4: Hülse
- 10: erstes Lager
- 20: zweites Lager
- 30: Hülse
- 40: Lagersitz
- 41: erster Installationsraum
- 42: zweiter Installationsraum
- 43: Stufenfläche
- 44: Nut
- 45: Gewinde
- 46: Nasen
- 47: Aufnahmehöhlung
- 50: Feder
- 60: Dichtungsring
- 61: Ringnut
- 70: Dichtungsstruktur
- 71: geknickter Teil
- 80: Innenloch
- 90: ringförmiger Einsatz
- 100: Lagergruppe

## Patentansprüche

1. Lagergruppe (100), **dadurch gekennzeichnet, dass** sie ein erstes Lager (10), ein zweites Lager (20) und einen Lagersitz (40) umfasst, wobei der Lagersitz (40) einen ersten Installationsraum (41) und einen zweiten Installationsraum (42) aufweist, um das erste Lager (10) und das zweite Lager (20) zu montieren, wobei das erste Lager (10) im ersten Installationsraum (41) montiert ist und mit dem Lagersitz (40) eine Einheit bildet, zwischen dem zweiten Lager (20) und dem ersten Lager (10) eine Hülse 30) angeordnet ist und die Hülse (30) zu dem ersten Lager (10) und dem zweiten Lager (20) koaxial angeordnet ist.

2. Lagergruppe (100) nach Anspruch 1, **dadurch gekennzeichnet, dass** der Lagersitz (40) eine mit dem ersten Installationsraum (41) verbundene und sich in radialer Richtung erstreckende Nut (44) aufweist und dass der Außenring des ersten Lagers (10) in der Nut (44) montiert ist.

3. Lagergruppe (100) nach Anspruch 2, **dadurch gekennzeichnet, dass** zwischen dem ersten Installationsraum (41) und dem zweiten Installationsraum (42) eine Stufenfläche (43) gebildet wird und im zweiten Installationsraum (42) eine Feder (50) montiert ist, wobei die eine Seite der Feder (50) an der Stufenfläche (43) und die andere Seite der Feder (50) am Außenring des zweiten Lagers (20) abgestützt ist.

4. Lagergruppe (100) nach Anspruch 3, **dadurch gekennzeichnet, dass** das zweite Lager (20) an der der Feder (50) gegenüberliegenden Seite einen Dichtungsring (60) aufweist.

5. Lagergruppe (100) nach Anspruch 4, **dadurch gekennzeichnet, dass** an der nahe dem zweiten Lager (20) liegenden Endfläche des Lagersitzes (40) eine Dichtungsstruktur (70) montiert ist und die Dichtungsstruktur (70) mit dem Dichtungsring (60) fest verbunden ist.

6. Lagergruppe (100) nach einem der Ansprüche 1 bis 5, **dadurch gekennzeichnet, dass** der Lagersitz (40) außen ein Gewinde (45) aufweist.

7. Lagergruppe (100) nach Anspruch 6, **dadurch gekennzeichnet, dass** zwischen dem Lagersitz (40) und der Hülse (30) eine Aufnahmehöhlung (47) angeordnet ist und der Lagersitz (40) eine mit der Aufnahmehöhlung (47) verbundene Ölbefüllungsbohrung aufweist.

8. Vorspinnmaschine, umfassend einen Flyer, wobei der Flyer eine Rotationsachse (1) aufweist und an der Rotationsachse (1) eine Lagergruppe (100) gemäß einem der Ansprüche 1 bis 7 montiert ist.
